Europäisches Patentamt

European Patent Office

Office européen des brevets

(19)

(11) Veröffentlichungsnummer: **0 146 705 B1**

(12) **EUROPÄISCHE PATENTSCHRIFT**

(45) Veröffentlichungstag der Patentschrift:
**16.09.87**

(21) Anmeldenummer: **84112067.8**

(22) Anmeldetag: **09.10.84**

(51) Int. Cl.⁴: **H 05 B 1/02,** G 05 D 23/19

(54) Anordnung zum Ableiten eines vom Temperaturanstieg einer Temperatur-Zeit-Kennlinie abhängigen Steuersignals in einem Heizsystem.

(30) Priorität: **26.10.83 DE 3338788**

(43) Veröffentlichungstag der Anmeldung:
**03.07.85 Patentblatt 85/27**

(45) Bekanntmachung des Hinweises auf die Patenterteilung:
**16.09.87 Patentblatt 87/38**

(84) Benannte Vertragsstaaten:
**AT BE CH FR GB IT LI LU NL SE**

(56) Entgegenhaltungen:
**DE - A - 2 950 730
DE - A - 3 317 941
DE - A - 3 319 302
DE - B - 1 765 499
US - A - 4 356 379
US - A - 4 369 352
US - A - 4 404 462**

(73) Patentinhaber: **Kurt Wolf & Co. KG,
Langwiesenweg 67/71, D-7547 Wildbad (DE)**

(72) Erfinder: **Andre, Wolfram, Eichenweg 7, D-7307 Aichwald
(DE)**

(74) Vertreter: **Vogel, Georg,
Hermann-Essig-Strasse 35 Postfach 105,
D-7141 Schwieberdingen (DE)**

## Beschreibung

Die Erfindung betrifft eine Anordnung zum Ableiten eines vom Temperaturanstieg einer Temperatur-Kennlinie abhängigen Messsignals in einem Heizsystem, das aus einem auf eine Heizplatte abgestellten Kochtopf mit Kochgut besteht und bei dem mittels eines Temperaturmessfühlers die Temperatur im oder am Kochtopf gemessen wird, wie z.B. aus DE-B-1 765 499 bekannt.

In einem derartigen Heizsystem wird das Messsignal in ein Steuersignal umgewandelt und zur Regelung der Heizleistung verwendet, da je nach Grösse des Temperaturanstieges die Heizleistung vergrössert oder reduziert werden muss, um unter Berücksichtigung der unterschiedlichen Zeitkonstanten des Heizsystems ein Überschwingen der Temperatur beim Erreichen der Kochtemperatur zu verhindern, die ja dann mittels eines Regelkreises konstant gehalten wird.

Die analoge Erfassung und Auswertung des Temperaturanstieges bringt aufwendige Schaltkreise mit sich. Wird die Auswertung digital vorgenommen, dann ergeben sich aufgrund der gerade in der Endphase des Aufheizvorganges auftretenden turbulenten Strömungen kurzzeitige Temperaturschwankungen, die zu erheblichen Messungenauigkeiten führen können, die dann noch vergrössert werden, wenn die digital erfassbaren Temperatursprünge aufgrund eines kleinen Schaltungsaufwandes verhältnismässig gross gewählt werden. Diese durch turbulente Strömungen im Kochtopf bedingten Temperaturschwankungen treten insbesondere dann auf, wenn im Kochtopf eine Temperatur erreicht ist, bei der die Dampfphase beginnt, d.h. etwa bei 90°C.

Da der Übergang von dieser Temperatur zur geregelten Kochtemperatur sehr stark von der Menge des Kochgutes im Kochtopf abhängig ist, ist es besonders wichtig, gerade in der Endphase des Aufheizvorganges den Temperaturanstieg exakt zu erfassen.

Es ist Aufgabe der Erfindung, eine Anordnung der eingangs erwähnten Art zu schaffen, bei der mit verhältnismässig geringem Schaltungsaufwand, d.h. grossen Temperatursprüngen, auch bei kurzzeitigen Temperaturschwankungen den durchschnittlichen Temperaturanstieg ausreichend genau genug zur Erzeugung des Messsignals auszunutzen.

Diese Aufgabe wird nach der Erfindung dadurch gelöst, dass das vom Temperaturmessfühler abgegebene analoge Messwertsignal periodisch in entsprechende Digitalsignale umgewandelt wird, dass die Digitalsignale zyklisch in die Speicherstellen eines zyklisch arbeitenden Speichers mit n Speicherstellen eingegeben werden, dass nach jedem Zyklus des Speichers aus den in den ersten k und den letzten k Speicherstellen des Speichers eingespeicherten Digitalsignalen jeweils ein Temperaturmittelwert gebildet wird, wobei k kleiner ist als n/2, dass aus den beiden Temperaturmittelwerten ein die während des vergangenen Zyklus aufgetretene Temperaturdifferenz kennzeichnendes Messsignal abgegeben wird und dass nach jedem Zyklus alle Speicherstellen des Speichers gelöscht und wieder neu mit Digitalsignalen belegt werden.

Bei dieser Anordnung erfolgt das Messen der Temperatur periodisch in kurzzeitigen Abständen, wobei eine Vielzahl von dabei abgeleiteten Digitalsignalen abgespeichert werden. Die Anzahl der abgespeicherten Digitalsignale hängt von der Anzahl der Speicherstellen des zyklischen Speichers ab. Der Zyklus des Speichers ist dabei ein Vielfaches des Abtastzyklus des analogen Messwertsignals. Um Ungenauigkeiten durch die verhältnismässig grossen Temperatursprünge bei der Umwandlung des Messwertsignals in das Digitalsignal und durch die kurzzeitigen Temperaturschwankungen, die oft einen Temperatursprung überschreiten können, zu eliminieren, werden mehrere Digitalsignale am Anfang und Ende des Zyklus gemittelt und aus den gemittelten Werten ein die während des vergangenen Zyklus aufgetretene Temperaturdifferenz kennzeichnendes Messsignal abgeleitet. Dieser Vorgang wiederholt sich nach jedem Zyklus, wobei nach der Ableitung des Messsignals alle Speicherstellen des Speichers gelöscht und dann wieder mit den Digitalsignalen des neuen Zyklus belegt werden. Für die Umwandlung des analogen Messwertsignals kann daher ein einfacher Analog-Digital-Wandler mit einer kleinen Anzahl von Bits eingesetzt werden.

Nach einer Ausgestaltung kann vorgesehen sein, dass das Messsignal in digitaler Form den Temperaturanstieg während des vergangenen Zyklus in Einheiten vorgegebener Temperatursprünge angibt. Das Messsignal ist dann abhängig von der während des Zyklus aufgetretenen Temperaturdifferenz.

Damit das Messsignal direkt für die Regelung der Heizleistung verwendet werden kann, ist nach einer weiteren Ausgestaltung vorgesehen, dass das Messsignal jeweils über den folgenden Zyklus gespeichert wird. Es ändert sich daher nur am Ende eines Zyklus.

Die Ableitung des Messsignals erfolgt nach einer Art einfach dadurch, dass am Ende des Zyklus die Digitalsignale der ersten k und der letzten k Speicherstellen des Speichers in jeweils einen Mittelwert-Schaltkreis übertragen werden, in dem die k Digitalsignale addiert und dann durch k geteilt werden und dass die die Temperaturmittelwerte kennzeichnenden digitalen Ausgangssignale dieser Mittelwert-Schaltkreise einer Differenzschaltung zugeführt werden, welche die Differenz aus den beiden zugeführten digitalen Ausgangssignalen bildet und ein entsprechendes digitales Steuersignal abgibt. Alle Schaltkreise dazu können in einem integrierten Bauelement vereinigt sein.

Da zu Beginn des Aufheizvorganges stets mit voller Heizleistung geheizt wird, ist zur Vereinfachung der Anordnung vorgesehen, dass die Umwandlung der analogen Messwertsignale des Temperaturmessfühlers in Digitalsignale erst ab einer Mindesttemperatur vorgenommen wird, wobei ein Analog-Digital-Wandler eingesetzt ist, der die analogen Messwertsignale erst ab einem vorgegebenen Analogwert umwandelt. Bei der Analog-Digital-Umwandlung braucht dann ein wesentlich kleinerer Temperaturbereich einbezogen zu werden. Dies führt bei gegebener Bitzahl des Analog-Digital-Wandlers zu einer grösseren Auflösung, d.h. zu kleineren Temperatursprüngen. Bei gegebenen Temperatursprüngen kann ein billigerer Analog-Digital-Wandler eingesetzt werden, der dann auch einen kleineren Speicheraufwand und Steuerungsaufwand zur Folge hat.

Für die Umwandlung der analogen Messwertsignale in Digitalsignale und das zyklische Einspeichern der Digitalsignale in den Speicher werden nach einer Ausgestaltung mittels Taktgeber gesteuert, wobei sich eine Serienübertragung der Digitalsignale anbietet.

Bei den Zeitkonstanten derartiger Heizsysteme hat sich eine Anordnung als ausreichend erwiesen, bei der das analoge Messwertsignal etwa alle Sekunde umgewandelt wird, ein Speicher mit etwa n = 20 bis n = 30 Speicherstellen verwendet wird und die Temperaturmittelwerte aus den gespeicherten Digitalsignalen von etwa k = 3 bis k = 5 Speicherstellen ermittelt werden.

Die Erfindung wird anhand der Zeichnung näher erläutert. Es zeigt:

Fig. 1 den typischen Verlauf der Temperatur-Zeit-Kennlinie T = f(t) eines Heizsystems, das aus einem auf einer Heizplatte abgestellten Kochtopf mit Kochgut besteht, und

Fig. 2 ein Blockschaltbild einer Anordnung zum Ableiten eines vom Temperaturanstieg der Temperatur-Zeit-Kennlinie nach Fig. 1 abhängigen Messsignals.

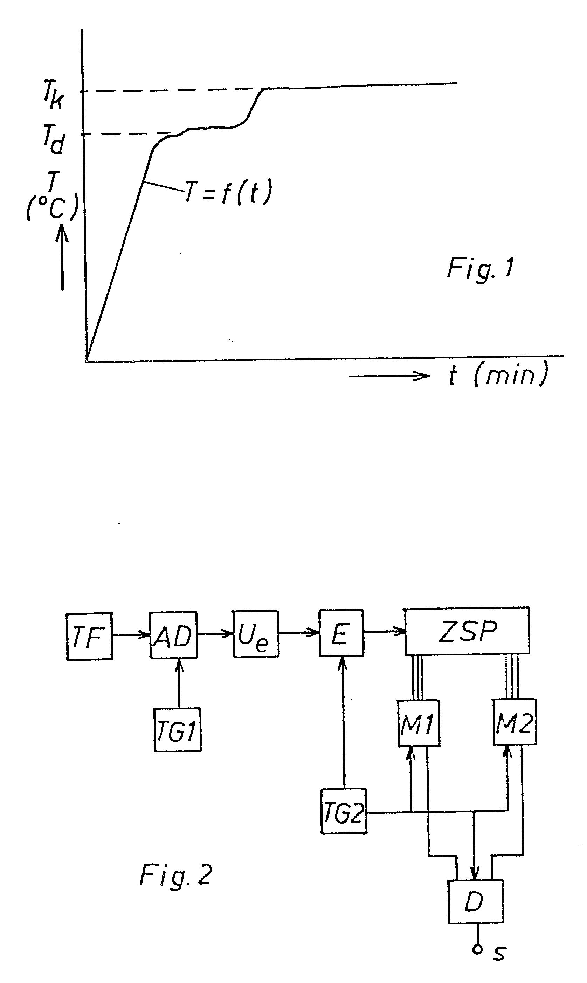

Wie die Temperatur-Zeit-Kennlinie T = f(t) nach Fig. 1 erkennen lässt, steigt in der Aufheizphase bei einem derartigen Heizsystem die Temperatur zunächst etwa proportional mit der Zeit an. Der Anstieg ist jedoch unterschiedlich und hängt von der Art und der Menge des Kochgutes im Kochtopf ab. Wenn man in diesem Bereich der Temperatur-Zeit-Kennlinie T = f(t) den Temperaturanstieg ermittelt, gibt das Steuersignal eine Aussage über das im Kochtopf befindliche Kochgut.

Erreicht die Temperatur einen Wert von Td = 90°C, dann beginnt die Dampfphase. Der Temperaturanstieg verlangsamt sich, ehe er dann wieder steiler in die Kochtemperatur Tk übergeht. Dieser flachere Teil der Temperatur-Zeit-Kennlinie T = f(t) ist bei einem Dampfdruckkochtopf wiederum abhängig von der Menge des festen, über dem Wasserbad angeordneten Kochgutes. Gerade in diesem Bereich treten aufgrund der jetzt im Kochtopf auftretenden turbulenten Strömungen kurzzeitige Temperaturschwankungen auf, die zu einer Verfälschung des Messergebnisses führen und sich in falschem Messsignal auswirken können, insbesondere dann, wenn sich diese Temperaturschwankungen über Temperaturbereiche erstrecken, die gleich oder grösser sind als die für die Digitalisierung des analogen Messwertsignals vorgesehenen Temperatursprünge.

In Fig. 2 ist ein Blockschaltbild einer Anordnung dargestellt, mit der das abgeleitete Messsignal s den Temperaturanstieg der Temperatur-Zeit-Kennlinie T = f(t) in einer vorgegebenen Zeitspanne selbst bei verhältnismässig grossen Temperatursprüngen der Digitalisierung und Temperaturschwankungen ausreichend genau wiedergibt.

Die Temperatur im oder am Kochtopf wird mit einem Temperaturmessfühler TF erfasst, der entsprechend der Temperatur ein analoges Messwertsignal abgibt. Als Temperaturmessfühler können verschiedene Einrichtungen eingesetzt werden, wenn sie nur ein der Temperatur entsprechendes analoges Messwertsignal abgeben. Über den Analog-Digital-Wandler AD wird mit Hilfe des Taktgebers TG1 in vorgegebenen Zeitabständen, von z.B. 1 Sekunde, eine Umwandlung des analogen Messwertes in ein entsprechendes Digitalsignal vorgenommen. Der Analog-Digital-Wandler ist so auszulegen, dass er den zu erfassenden Temperaturbereich in den vorgegebenen Temperatursprüngen, von z.B. 0,5°C, erfassen und in entsprechenden Digitalsignalen wiedergeben kann. Dabei kann zur Vereinfachung vorgesehen sein, dass die Aufheizphase bis zu einer vorgegebenen Temperatur, von z.B. 40°C, zu keinem Digitalsignal am Ausgang des Analog-Digital-Wandlers AD führt, d.h. der Nullpunkt der Analog-Digital-Wandlung liegt z.B. bei 40°C. Damit kann mit einem vorgegebenen Analog-Digital-Wandler AD der restliche Temperaturbereich in kleineren Temperatursprüngen erfasst und so die Messgenauigkeit gesteigert werden.

Bei einem zulässigen Temperatursprung von z.B. 0,5°C kann wiederum der Aufwand, d.h. die Bitzahl, des Analog-Digital-Wandlers AD, reduziert werden. Die Digitalsignale werden über die Übertragungsstrecke Ue übertragen, die unterschiedlich ausgebildet sein kann. Der Empfänger E erkennt die übertragenen Digitalsignale und mit Hilfe des Taktgebers TG2 werden sie in den zyklischen Speicher ZSP eingegeben. Dieser Speicher ZSP hat z.B. n = 24 Speicherstellen, so dass die Zyklusdauer z.B. 24 Sekunden beträgt. Nach 24 Sekunden sind in alle der n = 24 Speicherstellen Digitalsignale eingegeben. Am Ende des Zyklus wird aus den ersten k = 3 bis 5 Speicherstellen und aus den letzten k = 3 bis 5 Speicherstellen ein Temperaturmittelwert gebildet. Die Digitalsignale werden in die Mittelwert-Schaltkreise M1 und M2 übertragen, addiert und dann durch den Faktor k geteilt. Auf diese Weise ergeben sich auf den Ausgängen der Mittelwert-Schaltkreise M1 und M2 gemittelte Digitalsignale, die einen Temperaturmittelwert aus den k Digitalsignalen darstellen. Kleine Unregelmässigkeiten, bedingt durch die vorgegebenen Temperatursprünge bei der Analog-Digital-Umwandlung und durch die kurzzeitigen Temperaturschwankungen, werden dadurch eliminiert. Die beiden gemittelten Digitalsignale auf den Ausgängen der Mittelwert-Schaltkreise M1 und M2 werden der Differenzschaltung D zugeführt, die daraus die Differenz bildet und ein digitales Messsignal s abgibt, das die Einheiten an Temperatursprüngen angibt, die die Temperatur vom Beginn bis zum Ende des vorangegangenen Zyklus zugenommen bzw. abgenommen hat. Dieses Messsignal s wird für die Dauer des folgenden Zyklus gespeichert, so dass es z.B. als Regelsignal für die Heizung verwendet werden kann. Danach werden alle Digitalsignale in den Speicherstellen des Speichers ZSP gelöscht und die neu eintreffenden Digitalsignale wieder in den Speicher ZSP für einen neuen Messvorgang am Ende dieses Zyklus eingegeben.

Das Messsignal s, das die im vergangenen Zyklus erfolgte Temperaturänderung in der Anzahl der vorgegebenen Temperatursprünge digital anzeigt, kann mit Hilfe einer Funktion, die in einem Programmspeicher abgespeichert ist, auch in ein Steuersignal für die Steuerschaltung der Heizung umgewandelt werden. Abhängig von der Grösse des Messsignals s wird daraus ein Steuersignal abgeleitet, das direkt die Einschaltzeit für die Heizung in dem folgenden Zyklus angibt.

Wird nach einem Zyklus festgestellt, dass eine Speicherstelle des Speichers kein Digitalsignal gespeichert hat, dann wird die Ableitung des Messsignals unterbunden und es bleibt das Messsignal s des vorhergehenden Zyklus wirksam. Die Anzahl der fehlerhaften Zyklen wird überwacht und nach einer vorgegebenen Anzahl erfolgt die Störungsmeldung, die mit der Abschaltung der Heizung verbunden ist.

## Patentansprüche

1. Anordnung zum Ableiten eines vom Temperaturanstieg einer Temperatur-Kennlinie [T = f(t)] abhängigen Messsignals in einem Heizsystem, das aus einem auf eine Heizplatte abgestellten Kochtopf mit Kochgut besteht und bei dem mittels eines Temperaturmessfühlers (TF) die Temperatur im oder am Kochtopf gemessen wird, dadurch gekennzeichnet, dass das vom Temperaturmessfühler (TF) abgegebene analoge Messwertsignal periodisch in entsprechende Digitalsignale umgewandelt wird, dass die Digitalsignale zyklisch in die Speicherstellen eines zyklisch arbeitenden Speichers (ZSP) mit n Speicherstellen eingegeben werden, dass nach jedem Zyklus des Speichers (ZSP) aus den in den ersten k und den letzten k Speicherstellen des Speichers (ZSP) eingespeicherten Digitalsignalen jeweils ein Temperaturmittelwert gebildet wird, wobei k kleiner ist als n/2, dass aus den beiden Temperaturmittelwerten ein die während des vergangenen Zyklus aufgetretene Temperaturdifferenz kennzeichnendes Messsignal (s) abgegeben wird und dass nach jedem Zyklus alle Speicherstellen des Speichers (ZSP) gelöscht und wieder neu mit Digitalsignalen belegt werden.

2. Anordnung nach Anspruch 1, dadurch gekennzeichnet, dass das Messsignal (s) in digitaler Form den Temperaturanstieg während des vergangenen Zyklus in Einheiten vorgegebener Temperatursprünge (z.B. 0,5°C) angibt.

3. Anordnung nach Anspruch 1 oder 2, dadurch gekennzeichnet, dass das Messsignal (s) jeweils über den folgenden Zyklus gespeichert wird.

4. Anordnung nach einem der Ansprüche 1 bis 3, dadurch gekennzeichnet, dass am Ende des Zyklus die Digitalsignale der ersten k und der letzten k Speicherstellen des Speichers (ZSP) in jeweils einen Mittelwert-Schaltkreis (M1, M2) übertragen werden, in dem die k Digitalsignale addiert und dann durch k geteilt werden und dass die die Temperaturmittelwerte kennzeichnenden digitalen Ausgangssignale dieser Mittelwert-Schaltkreise einer Differenzschaltung (D) zugeführt werden, welche die Differenz aus den beiden zugeführten digitalen Ausgangssignalen bildet und ein entsprechendes digitales Messsignal (s) abgibt.

5. Anordnung nach einem der Ansprüche 1 bis 4, dadurch gekennzeichnet, dass die Umwandlung der analogen Messwertsignale des Temperaturmessfühlers (TF) in Digitalsignale erst ab einer Mindesttemperatur vorgenommen wird, wobei ein Analog-Digital-Wandler (AD) eingesetzt ist, der die analogen Messwertsignale erst ab einem vorgegebenen Analogwert umwandelt.

6. Anordnung nach einem der Ansprüche 1 bis 5, dadurch gekennzeichnet, dass die Umwandlung der analogen Messwertsignale in Digitalsignale und das zyklische Einspeichern der Digitalsignale in den Speicher (ZSP) mittels Taktgeber (TG1, TG2) gesteuert werden.

7. Anordnung nach Anspruch 6, dadurch gekennzeichnet, dass das analoge Messwertsignal etwa alle Sekunde umgewandelt wird, dass ein Speicher mit etwa n = 20 bis n = 30 Speicherstellen verwendet wird und dass die Temperaturmittelwerte aus etwa k = 3 bis k = 5 Speicherstellen ermittelt werden.

8. Anordnung nach einem der Ansprüche 1 bis 7, dadurch gekennzeichnet, dass aus dem Messsignal (s) mittels einer in einem Programmspeicher vorgegebenen Funktion ein Steuersignal für die Steuerschaltung der Heizung ableitbar ist, das direkt die Einschaltdauer der Heizung für den folgenden Zyklus angibt.

9. Anordnung nach einem der Ansprüche 1 bis 8, dadurch gekennzeichnet, dass die Ableitung eines Messsignals (s) unterbleibt, wenn in einer Speicherstelle des Speichers (ZSP) kein Digitalsignal gespeichert ist, dass für diesen Zyklus das Messsignal (s) des vorhergehenden Zyklus aufrechterhalten bleibt und dass bei einer vorgegebenen Anzahl von fehlerhaften Zyklen ein Störungssignal zur Abschaltung der Heizung ableitbar ist.

## Claims

1. Arrangement for transmitting a data signal dependent on the rise in a characteristic curve for temperature [T = f(t)] in a heating system which consists of a cooking vessel with food for cooking in it placed on a hotplate and by which the temperature in or on the cooking vessel is measured by means of a temperature sensor (TF), characterized by the fact that the analogue data signal transmitted by the temperature sensor (TF) is periodically converted into corresponding digital signals, that the digital signals are cyclically entered in the locations of a memory (ZSP) with n locations that operates cyclically, that after each cycle of the memory (ZSP) one temperature mean is formed from the digital signals stored in the first k and final k locations of the memory (ZSP), whereby k is smaller than n/2, that from the two temperature means a data signal (s) characterizing the temperature difference that has occurred during the past cycle is transmitted, and that after each cycle all the locations in the memory (ZSP) are erased and are occupied again with new digital signals.

2. Arrangement according to claim 1, characterized by the fact that the data signal (s) gives the rise in temperature during the past cycle in digital form and in units of the preselected temperature steps (e.g. 0.5°).

3. Arrangement according to claim 1 or 2, characterized by the fact that the data signal (s) is stored during the following cycle.

4. Arrangement according to one of the claims 1 to 3, characterized by the fact that at the end of the cycle the digital signals of the first k and the final k locations in the memory (ZSP) are each transferred to a mean-value circuit (M1, M2), in which the k digital signals are added and then divided by k, and that the digital output signals that characterize the temperature means of these mean-value circuits are fed to a differential connection (D), which forms the difference between the two digital output signals supplied and transmits a corresponding digital data signal (s).

5. Arrangement according to one of the claims 1 to 4, characterized by the fact that the conversion of the analogue data signals of the temperature sensor (TF) into digital signals only takes place starting from a minimum temperature, whereby an analogue-digital converter (AD) is employed that only converts the analogue data signals starting from a preselected analogue value.

6. Arrangement according to one of the claims 1 to 5, characterized by the fact that the conversion of the analogue data signals into digital signals and the cyclical storing of the digital signals in the memory (ZSP) are controlled by means of clock-pulse generators (TG1, TG2).

7. Arrangement according to claim 6, characterized by the fact that the analogue data signal is converted approx. once a second, that a memory with approx. n = 20 to n = 30 memory locations is used, and that the temperature means are calculated from approx. k = 3 to k = 5 memory locations.

8. Arrangement according to one of the claims 1 to 7, characterized by the fact that a control signal for the heating control circuit can be derived from the data signal (s) by means of a function predetermined in a programme memory, the control signal directly giving the duty cycle of the heating for the following cycle.

9. Arrangement according to one of the claims 1 to 8, characterized by the fact that the transmission of the data signal (s) does not take place when there is no digital signal stored in an memory location of the memory (ZSP), that the data signal (s) of the previous cycle is maintained for this cycle, and that a fault signal can be transmitted so as to switch off the heating in the case of a predetermined number of defective cycles.

**Revendications**

1. Dispositif pour dériver un signal de mesure, dépendant de l'accroissement de température d'une courbe caractéristique de température [T = f(t)] dans un circuit de chauffage, qui se compose d'un ustensile de cuisson contenant des aliments à cuire et placé sur une plaque chauffante, et dans lequel la température est mesurée, dans l'ustensile de cuisson ou sur celui-ci, au moyen d'un capteur (TF) de mesure de température, dispositif caractérisé en ce que le signal de valeur de mesure analogique délivré par le capteur (TF) de mesure de température est périodiquement transformé en des signaux numériques correspondants, en ce que des signaux numériques sont périodiquement introduits dans les cases de mémoire d'une mémoire (ZSP) à n cases de mémoire, travaillant cycliquement, en ce qu'après chaque cycle de la mémoire (ZSP), on établit chaque fois une valeur moyenne de température à partir des signaux numériques enregistrés dans les k premières et les k dernières cases de mémoire de la mémoire (ZSP), k étant inférieur à n/2, en ce qu'à partir des deux valeurs moyennes de température, un signal s de mesure, caractérisant la différence de température intervenue pendant le cycle écoulé, est émis, et en ce qu'après chaque cycle, toutes les cases de mémoire de la mémoire (ZSP) sont effacées ou vidées et de nouveau occupées par des signaux numériques.

2. Dispositif selon la revendication 1, caractérisé en ce que le signal (s) de mesure indique, sous forme numérique en des unités d'écarts de température (ou des gradations de température) définies à l'avance (par exemple 0,5°), l'accroissement de température pendant le cycle écoulé.

3. Dispositif selon la revendication 1 ou 2, caractérisé en ce que le signal (s) de mesure est à chaque fois mis en mémoire pour la durée du cycle suivant.

4. Dispositif selon l'une des revendications 1 à 3, caractérisé en ce qu'à la fin du cycle les signaux numériques des k premières et des k dernières cases de mémoire de la mémoire (ZSP) sont dans chaque cas transmis à un circuit (M1, M2) de valeur moyenne, dans lequel les k signaux numériques sont additionnés, puis divisés par k et en ce que les signaux numériques de sortie caractérisant les valeurs moyennes de température et provenant de ces circuits de valeur moyenne, sont transmis à un circuit (D) de formation de la différence, qui calcule la différence entre les deux signaux numériques de sortie introduits et délivre un signal numérique (s) de mesure correspondant.

5. Dispositif selon l'une des revendications 1 à 4, caractérisé en ce que la transformation des signaux analogiques de valeur de mesure, provenant du capteur (TF) de mesure de température, en des signaux numériques n'est opérée qu'à partir d'une température minimale, un convertisseur (AD) analogique-numérique n'étant mis en oeuvre pour transformer les signaux analogiques de mesure, qu'à partir d'une valeur analogique définie à l'avance.

6. Dispositif selon l'une des revendications 1 à 5, caractérisé en ce que la transformation des signaux analogiques de valeur de mesure en signaux numériques et l'opération cyclique de mise en mémoire des signaux numériques dans la mémoire (ZSP) sont commandées par un séquenceur (TG1, TG2).

7. Dispositif selon la revendication 6, caractérisé en ce que le signal analogique de valeur de mesure est transformé environ toutes les secondes, en ce qu'on utilise une mémoire munie d'environ n = 20 à n = 30 cases de mémoire et en ce que les valeurs moyennes de température sont établies à partir d'environ k = 3 à k = 5 cases de mémoire.

8. Dispositif selon l'une des revendications 1 à 7, caractérisé en ce qu'à partir du signal (s) de mesure peut être dérivé et émis au moyen d'une fonction, définie au préalable dans une mémoire de programme, un signal de pilotage du circuit de commande de chauffage, ce signal indiquant la durée de fonctionnement du chauffage pour le cycle suivant.

9. Dispositif selon l'une des revendications 1 à 8, caractérisé en ce que l'émission d'un signal (s) de mesure n'intervient pas si, dans une case de mémoire de la mémoire (ZSP) il n'y aucun signal numérique enregistré et en ce que, pour ce cycle, le signal (s) de mesure du cycle précédent reste valide et en ce que, dans le cas d'un nombre défini à l'avance de cycles défectueux, un signal de dérangement peut être émis pour interrompre le chauffage.

Fig.1

Fig.2